# EUROPÄISCHE PATENTSCHRIFT

(11) **EP 0 997 446 B1**
(45) Veröffentlichungstag und Bekanntmachung des Hinweises auf die Patenterteilung: **10.03.2004**
(21) Anmeldenummer: 99115712.4
(22) Anmeldetag: 07.08.1999
(51) Int. Cl.: C03C 17/30

(54) **Verfahren zur Herstellung oberflächenversiegelter Hohlglasbehälter mit hoher Gebrauchsfestigkeit**
Process for manufacturing surface-sealed hollow glass containers with high durability
Procédé de fabrication de conteneurs en verre creux à surface imperméabilisée et à haute durabilité

(30) Priorität: 01.09.1998 DE 19839682
(43) Veröffentlichungstag der Anmeldung: 03.05.2000
(73) Patentinhaber: Degussa AG, 40474 Düsseldorf (DE); Saint-Gobain Oberland AG, 88410 Bad Wurzach (DE)
(72) Erfinder: Jenkner, Peter, Dr., 79618 Rheinfelden (DE); Lomölder, Rainer, Dr., 48153 Münster (DE); Speier, Peter, 45768 Marl (DE); Stäbler, Elmar, 88410 Bad Wurzach (DE); Fickler, Alois, 87772 Pfaffenhausen (DE); Buchmayer, Gerd, 88410 Bad Wurzach (DE)

(56) Entgegenhaltungen:
- EP-A- 0 992 555
- WO-A-98/59010
- DE-A- 19 643 110
- DE-C- 19 620 668
- US-A- 3 729 339

## Beschreibung

Die Erfindung betrifft ein Verfahren zur Herstellung oberflächenversiegelter Hohlglasbehälter mit Hilfe spezieller Kaltendvergütungsmittel.

Es ist bekannt, im Herstellungsprozeß der Hohlglasbehälter diese einer Oberflächenbehandlung zu unterziehen, mit der äußere Schäden, wie Mikrorisse, überdeckt und weitere Schäden minimiert werden sollen. So wird bereits unmittelbar nach der Produktionsmaschine die sogenannte Heißendvergütung auf die 500 bis 550 °C heiße Glasoberfläche als dünne Schicht aufgebracht. Hierbei handelt es sich insbesondere um Titan- und Zinnchloride. Diese erzeugen auf den Glasoberflächen eine Titan- oder Zinndioxidschicht, wobei das freiwerdende Chlor in das Abgas übergeht. Die Aufbringung des Heißendvergütungsmittels erfolgt durch Bedampfung oder Sprühzerstäubung.

Nach der Heißendvergütung durchlaufen die Hohlglasbehälter einen Kühlofen, in dem sie zur Vermeidung von schädlichen Spannungen langsam abgekühlt werden.

Am sogenannten Austragsende des Kühlofens werden die zuvor heißendvergüteten Hohlglasbehälter entweder mittels Bedampfung oder durch Sprühzerstäubung kaltendvergütet. Dadurch entsteht die für den weiteren Ablauf in der Glashütte und im Abfüllbetrieb notwendige Glätte.

Die häufigsten Substanzen, die als Kaltendvergütungsmittel Verwendung finden, sind Tenside, Fettsäureprodukte, partielle Fettsäureester, Esterwachsemulsionen und unterschiedliche Polyethylen-Dispersionen.

Ein Beschichtungsverfahren, bei dem zuerst eine Heißendvergütung durchgeführt wird und anschließend als Kaltendvergütungsmittel ein Olefinpolymerisat, ein Polyurethan, ein Polystyrol oder ein Essigsäuresalz eines Alkylamins aufgesprüht wird, ist aus der DE-PS 12 91 448 bekannt. Die so beschichteten Flaschen genügen jedoch nicht allen Anforderungen.

Eine gewisse Verbesserung der Kratzfestigkeit wird erzielt, wenn die als Kaltendvergütungsmittel aufgesprühte Polyethylen-Dispersion zusätzlich ein Silan enthält (US-PSS 3 438 801, 3 801 361, 3 873 352, 4 130 677, 4 374 879, EP-A-0 146 142). Das Eigenschaftsniveau reicht jedoch noch nicht für alle Anwendungen aus.

In der nicht vorveröffentlichten EP-A-992 555 wird ein gefärbtes Beschichtungsmittel für Glas beschrieben, das aus Phenyltrialkoxysilan, einem Polymer ausgewählt aus Acrylpolyolen, Polyesterpolyolen, Polyetherpolyolen und Niederalkylpolyolen, gegebenenfalls einem Polyisocyanatharz sowie einem organischen Farbstoff hergestellt wird.

Die US-A-3 729 339 beschreibt eine dekorative Beschichtung für Glasoberflächen, die ein hydroxylgruppenhaltiges Acrylharz, ein Aminoplastharz als Vernetzer sowie ein Epoxysilan enthält.

In der DE 196 20 668 C wird ein thermisch härtbarer Mehrkomponentenlack beschrieben, der mindestens eine flüssige Komponente A enthält, die durch Hydrolyse eines Gemisches eines Tetraalkoxysilans, eines Epoxyalkylsilans und eines Polyols in einem organischen Lösungsmittel gebildet ist, sowie mindestens eine flüssige Komponente B, die durch Hydrolyse eines Metallalkoholats in einem organischen Lösungsmittel gebildet ist.

Die DE 196 43 110 A offenbart ein Verfahren zur Beschichtung der Oberflächen von Hohlglasbehältern im Herstellungsprozess, bei dem im Bereich des Austritts eines einer Maschine zur Herstellung von Hohlglasbehältern nachgeordneten Kühlofens eine Beschichtung der Hohlglasbehälter mittels einer Lösung bzw. Dispersion aus Silan und Polyethylen als Beschichtungsmittel erfolgt.

Eine weitere Entwicklung des Standes der Technik ging dahin, als Kaltendvergütung zuerst die Lösung oder Dispersion eines Silans und anschließend eine weitere Komponente wie z. B. eine Polyethylendispersion aufzusprühen. Hier sei auf die US-PSS 3 438 801, 4 130 677, 4 304 802, 5 567 235 (entspricht der WO-A-95/00259) sowie auf die EP-A-0 146 142 und die EP-A-0 478 154 hingewiesen.

Darüber hinaus ist es bekannt, daß eine Kaltendvergütung auch mit einem Polysiloxan durchgeführt werden kann (US-PS 4 985 286; DE-A-31 44 457).

In der EP-A-0 011 519 wird ein Verfahren beschrieben, bei dem Glasflaschen mit einem Silan sowie mit einer gepulverten Polyurethan-Vorstufe behandelt werden. Darüber hinaus beschreibt die GB-A-2 021 124 ein Verfahren zur Beschichtung von Glasbehältern, bei dem ein Polyaminoacrylester, ein Vernetzungsmittel, ein Wachs und ein Vinylaminosilan aufgetragen werden.

Trotz der beschriebenen Vergütungen, die zwar eine gute Basisfestigkeit der Glasbehälter gewährleisten, nimmt diese jedoch im weiteren Produktionsprozeß und dem anschließenden Gebrauch der Behälter rapide ab. Ursachen für diesen Festigkeitsverlust sind Mikrobeschädigungen, die unvermeidbar während der Formgebung und dem anschließenden Heißendtransport der Glasbehälter entstehen und je nach Beschädigungsgrad, Beschädigungsposition und Behälterbelastung als potentielle Bruchauslöser wirken können.

Eine Aufgabe der vorliegenden Erfindung besteht darin, derartige Mikrobeschädigungen noch im Herstellungsprozeß unschädlich zu machen.

Eine weitere Aufgabe besteht darin, die Hohlkörper bei der anschließenden Handhabung, d. h. auf dem Transportband, beim Abpacken, beim Versand und beim Befüllen, gegen mechanische Einwirkungen auf die Oberfläche unempfindlicher zu machen.

Ein weiterer wesentlicher Gesichtspunkt ist der, daß die Hohlkörper gegenüber dem Stand der Technik eine verbesserte Basisfestigkeit sowie eine verbesserte Dauergebrauchsfestigkeit aufweisen sollten. So sollten insbesondere Mehrwegflaschen für kohlensäurehaltige Getränke auch nach vielen Rückläufen noch eine ausreichend hohe Festigkeit und insbesondere Innendruckfestigkeit aufweisen.

Zusätzlich sollten die Hohlglasbehälter eine verbesserte chemische Resistenz aufweisen, insbesondere gegenüber Wasser und Waschlaugen.

Darüber hinaus sollten die Trocken- und die Naßkratzfestigkeit gesteigert und die Durchkratzeigenschaften verbessert werden.

Insgesamt sollten die mechanischen Eigenschaften gegenüber dem Stand der Technik so verbessert werden, daß bei gleicher Festigkeit das Behältergewicht reduziert werden kann.

Die mechanischen Eigenschaften sollten gegenüber dem Stand der Technik weiterhin so verbessert werden, daß bei gleicher Endfestigkeit auf eine Heißendvergütung verzichtet werden kann.

Gegenüber der üblicherweise durchgeführten Vergütung sollte eine verbesserte Etikettierung, auch mit herkömmlichen Leimen, möglich sein.

Darüber hinaus sollte es auch möglich sein, die Hohlglasbehälter mit der Oberflächenversiegelung einzufärben, wobei diese Einfärbung kratz- und waschlaugenbeständig sein sollte, um eine hohe Flexibilität der Typenpalette ohne anschließende Probleme beim Glasrecycling zu erzielen.

Zur Lösung dieser Aufgaben wird ein Verfahren zur Herstellung oberflächenversiegelter Hohlglasbehälter vorgeschlagen, bei dem im Herstellungsprozeß im Bereich des Austritts des Kühlofens, der einer Maschine zur Herstellung von Hohlglasbehältern nachgeordnet ist, eine Beschichtung der Hohlglasbehälter mittels eines wasserbasierenden Kaltendvergütungsmittels erfolgt, das mindestens folgende Komponenten enthält:
I. ein Trialkoxysilan, ein Dialkoxysilan und/oder ein Tetraalkoxysilan beziehungsweise deren Hydrolyse- und/oder Kondensationsprodukte sowie
II. die wasserlösliche oder wasserdispergierbare Mischung aus einem Polyol und einem Vernetzer für das Polyol,
   wobei die aufgetragene Schicht des Kaltendvergütungsmittels anschließend einem Vernetzungsschritt im Temperaturbereich zwischen 100 und 350 °C unterworfen wird.
   Eine vorteilhafte Ausgestaltung dieses Verfahrens besteht darin, daß das wasserbasierende Kaltendvergütungsmittel zusätzlich zu den Komponenten I und II noch folgende Komponente enthält:
III. Eine siliciumfreie Komponente, ausgewählt aus
   a) einem Wachs und/oder
   b) einem partiellen Fettsäureester und/oder
   c) einer Fettsäure und/oder
   d) einem Tensid.

   Eine weitere vorteilhafte Ausgestaltung des Verfahrens besteht darin, daß das wasserbasierende Kaltendvergütungsmittel zusätzlich zu den Komponenten I, II und gegebenenfalls III folgende weitere Komponente enthält:
IV. Ein Färbungsmittel, ausgewählt aus organischen Pigmenten, anorganischen Pigmenten und/oder organischen Farbstoffen.

Daneben kann das wasserbasierende Kaltendvergütungsmittel übliche Hilfsstoffe wie z. B. Entschäumer, Verlaufsmittel, Katalysatoren (z. B. für die Vernetzung der Komponenten I bzw. II), Additivharze oder Thixotropiemittel enthalten.

Hohlglasbehälter im Sinne dieser Erfindung sind grundsätzlich jede Art von Verpackungsglas, beispielsweise Flaschen, Konservengläser, Ampullen, Tablettenröhrchen oder Flacons.

Auf die Oberflächen der frisch hergestellten Hohlglasbehälter kann, falls gewünscht, im Bereich des Eintritts des Kühlofens ein an sich bekanntes sogenanntes Heißendvergütungsmittel nach jedem Verfahren des Standes der Technik aufgebracht werden. Angesichts der erfindungsgemäß erzielten enormen Steigerung der Gebrauchsfestigkeit kann aber auch auf die Heißendvergütung verzichtet werden, was nicht nur kostengünstiger ist, sondern auch durch Emissionsreduzierung einen ökologischen Vorteil bietet. Darüber hinaus erhält man bei Fortfall der Heißendvergütung verbesserte Produktionsbedingungen bei der Glasbehälterherstellung durch zusätzlichen Freiraum, wie Verlängerung der Maschinenbandkühlung, der Seitenkühlung, besseren Zugriff, Installationsmöglichkeit für Heißendinspektionsmaschinen usw.

Im folgenden sollen die einzelnen Komponenten sowie die Verfahrenseinzelheiten näher erläutert werden.

Bei der Komponente I kann grundsätzlich jedes Trialkoxysilan, Dialkoxysilan und Tetraalkoxysilan verwendet werden. Beispiele hierfür sind nachstehend unter den Formeln I bis IV angegeben. Selbstverständlich können hierbei auch Mischungen verwendet werden.

Die Mitverwendung von Monoalkoxysilanen ist innerhalb gewisser Grenzen zwar möglich, aber wegen der verringerten Stabilität der entstehenden Lösung, d. h. der Neigung zu Ausfällungen, nicht zu empfehlen.

Dieses Silan bzw. die Silanmischung kann in wäßriger Lösung (homogen oder kolloidal) oder als Emulsion, sofern diese stabil ist, verwendet werden. Die Konzentration richtet sich nach den anwendungstechnischen Erfordernissen und ist daher keinen grundsätzlichen Beschränkungen unterworfen. Sie kann beispielsweise maximal 20%ig, maximal 15%ig, maximal 10%ig, maximal 7,5%ig, maximal 5%ig, maximal 3%ig, maximal 2%ig, maximal 1%ig oder maximal 0,8%ig sein. Der Mindestgehalt beträgt beispielsweise 0,05 %, 0,1 %, 0,2 % oder 0,3 %. Alle Prozentangaben beziehen sich hier sowie im folgenden auf Gewichtsprozente.

In einer bevorzugten Ausführungsform werden diese Silane als Hydrolyse- und/oder Kondensationsprodukt eingesetzt, besonders bevorzugt als wasserbasierende organopolysiloxanhaltige Zusammensetzung, die hergestellt wird aus
a) Q Molen eine funktionelle Gruppe tragender Alkoxysilane der allgemeinen Formel

   A-Si(R¹)_{y}(OR*)_{3-y} I

   und
b) M Molen Alkoxysilane, ausgewählt aus
   α) Trialkoxysilanen der allgemeinen Formel

   R²-Si(OR**)₃ II

   und/oder
   β) Dialkoxysilanen der allgemeinen Formel

   R³R⁴Si(OR***)₂ III

   und/oder
   γ) Tetraalkoxysilanen der allgemeinen Formel

   Si(OR****)₄, IV

   wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfan- oder Halogengruppe besitzt,

R¹ = Methyl, Ethyl oder A (wie vorstehend definiert),
y = 0 oder 1,
R*, R**, R*** und R**** sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
im molaren Verhältnis 0 ≤ M/Q ≤ 20.

Das eine funktionelle Gruppe tragende Alkoxysilan der allgemeinen Formel

A-Si(R¹)_{y}(OR*)_{3-y} I

kann beispielsweise aus folgenden Verbindungen ausgewählt werden:
3-Aminopropyl-trimethoxysilan, 3-Aminopropyl-triethoxysilan, 3-Pyrrolidinopropyltrimethoxysilan, N-Methyl-3-aminopropyl-trimethoxysilan, 3-Aminopropyl-methyldiethoxysilan, N-Aminoethyl-3-aminopropyl-trimethoxysilan, N-(Benzylaminoethyl)-3-aminopropyl-trimethoxysilan, p-Anilino-triethoxysilan, 4-Aminobutyl-methyldiethoxysilan, (CH₃O)₃Si-C₃H₆-NH-C₂H₄-NH-C₂H₄-NH₂, 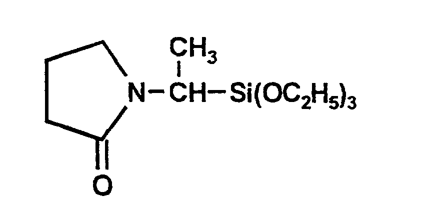 3-Glycidyloxypropyl-trimethoxysilan, 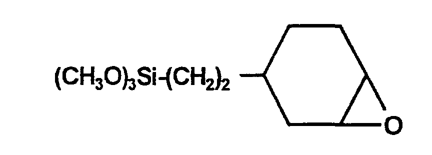 CH₂=C(CH₃)-COO-C₃H₆-Si(OCH₃)₃,
CH₂=CH-COO-C₃H₆-Si(OC₂H₅)₃, 3-Cyanopropyl-trimethoxysilan, 3-Cyanopropyltriethoxysilan, 3-Isocyanatopropyl-triethoxysilan, Ureidopropyl-trimethoxysilan, 3-Thiocyanatopropyl-trimethoxysilan, 3-Mercaptopropyl-trimethoxysilan, 3-Mercaptopropyl-triethoxysilan, 3-Mercaptopropyl-methyl-dimethoxysilan, 4-Mercaptobutyl-trimethoxysilan, 6-Mercaptohexyl-trimethoxysilan, 3-Chloropropyltrimethoxysilan und (C₂H₅O)₃Si(CH₂)₃-S₄-(CH₂)₃Si(OC₂H₅)₃.

Als Trialkoxysilan der allgemeinen Formel

R²-Si(OR**)₃ II

sind beispielsweise folgende Verbindungen geeignet:
Methyltrimethoxysilan, Methyltriethoxysilan, Ethyltrimethoxysilan, Ethyltriethoxysilan, n-Propyltriethoxysilan, n-Butyltrimethoxysilan, i-Butyltrimethoxysilan, Octyltriethoxysilan, Hexadecyltrimethoxysilan, Stearyltrimethoxysilan, Cyclohexyl-trimethoxysilan, Cyclohexenylethyltriethoxysilan, Phenyltrimethoxysilan, Phenyltriethoxysilan, Vinyltrimethoxysilan, Vinyltriethoxysilan, Vinyl-tris(2-methoxy-ethoxy)silan, Allyltrimethoxysilan, Allyltriethoxysilan, CF₃CH₂CH₂-Si(OCH₃)₃, CF₃CH₂CH₂-Si(OC₂H₅)₃, C₂F₅CH₂CH₂-Si(OCH₃)₃, C₄F₉CH₂CH₂-Si(OCH₃)₃, n-C₆F₁₃CH₂CH₂-Si(OC₂H₅)₃, n-C₈F₁₇CH₂CH₂-Si(OCH₃)₃ und n-C₁₀F₂₁CH₂CH₂-Si(OCH₃)₃.

Geeignete Dialkoxysilane der allgemeinen Formel

R³R⁴Si(OR***)₂ III

sind beispielsweise Dimethyldimethoxysilan, Dimethyldiethoxysilan, Diethyldimethoxysilan, Methyl-i-butyl-diethoxysilan, Cyclohexyl-methyldimethoxysilan, Diphenyldimethoxysilan, Diphenyldiethoxysilan, Methyl-phenyldimethoxysilan und CF₃CH₂CH₂Si(CH₃)(OCH₃)₂.

Als Tetraalkoxysilan der allgemeinen Formel

Si(OR****)₄ IV

sind beispielsweise folgende Verbindungen geeignet:
Tetramethoxysilan, Tetraethoxysilan, Tetra(n-propoxy)silan, Tetra(i-propoxy)silan und Tetra(n-butoxy)silan.

Im Gemisch der Silane I bis IV sind durchschnittlich pro Siliciumatom bevorzugt mindestens 2,4 Alkoxygruppen OR*, OR**, OR*** bzw. OR****, besonders bevorzugt mindestens 2,5 Alkoxygruppen und ganz besonders bevorzugt mindestens 2,6 Alkoxygruppen enthalten. Hiermit kann gewährleistet werden, daß die entstehenden organopolysiloxanhaltigen Zusammensetzungen ausreichend wasserlöslich sind. In Abhängigkeit von den Substituenten A und R¹ bis R⁴ können jedoch auch unterhalb des bevorzugten Mindestwertes von 2,4 ausreichend wasserlösliche Systeme erhalten werden. Hier kann der Fachmann auf seine Erfahrungen zurückgreifen und geeignete Systeme gegebenenfalls durch einfache Routineversuche auffinden.

Die wasserbasierende organopolysiloxanhaltige Zusammensetzung kann aus den Monomeren der Formeln I bis IV durch Mischen der Silanzusammensetzung mit Wasser und Stehenlassen bei Raumtemperatur über mindestens 3 Stunden hergestellt werden. Hierbei sollten pro Mol der eingesetzten Alkoxysilane mindestens 0,5 Mol und bevorzugt mindestens 1 Mol Wasser verwendet werden. Man kann auch von vorneherein die gesamte Wassermenge, die im anwendungsfertigen Kaltendvergütungsmittel enthalten ist, zusetzen. Während der Reifezeit findet eine Vorkondensation zu oligomeren Strukturen statt. Hierbei können ohne weiteres die übrigen Komponenten bereits zu Anfang zugesetzt werden.

In einer bevorzugten Ausführungsform läßt man die Mischung der Silanzusammensetzung mit Wasser (und gegebenenfalls den übrigen Komponenten) mindestens 4 Stunden und besonders bevorzugt mindestens 6 Stunden bei Raumtemperatur (ca. 20 °C) stehen.

Bei höheren oder tieferen Temperaturen muß die Reifezeit entsprechend angepaßt werden. Hierbei kann man sich der Faustregel bedienen, daß eine Temperaturerhöhung um 10 °C in etwa eine Verdoppelung der Reaktionsgeschwindigkeit mit sich bringt.

Die wasserbasierende organopolysiloxanhaltige Zusammensetzung kann aber auch hergestellt werden durch Versetzen der Silanzusammensetzung gemäß den allgemeinen Formeln I bis IV mit 0,5 bis 30 Molen Wasser pro Mol der eingesetzten Alkoxysilane und Entfernen des bei der Umsetzung entstandenen Alkohols durch Destillation. Geeignete Verfahren sowie einige der bei der Reaktion entstehenden oligomeren Strukturen sind in der DE-OS 44 43 824 und der DE-OS 44 43 825 offenbart, auf die hier ausdrücklich Bezug genommen wird.

Die entstandene Zusammensetzung kann homogen oder kolloidal sein. Auch eine Emulsion kann erfindungsgemäß verwendet werden, sofern diese stabil ist. Die einzige Grundvoraussetzung, die erfüllt sein muß, ist die, daß während der Gebrauchsdauer keine Ausfällungen entstehen.

Bevorzugt stehen die Alkoxysilane der Formeln II bis IV und die funktionellen Alkoxysilane der Formel I miteinander im Verhältnis 0 ≤ M/Q ≤ 12, besonders bevorzugt im Verhältnis 0,02 ≤ M/Q ≤ 7 und ganz besonders bevorzugt im Verhältnis 0,1 ≤ M/Q ≤ 4.

Die Komponente II wirkt als Synergist zur Erzielung besonders hoher Festigkeitswerte.

Zudem hat sich herausgestellt, daß die Mischung der Komponenten I und II eine deutlich bessere Fixierung des Färbemittels (Komponente IV) ergibt als jede der Komponenten I oder II alleine.

Die Komponente II besteht aus der Mischung aus einem Polyol und einem Vernetzer. Grundzüge dieser Technologie sind in L. Dulog, Angew. Makromol. Chem. 123/124 (1984), 437 - 455 beschrieben.

Das mittlere Molekulargewicht (Zahlenmittel Mₙ) der wasserlöslichen oder wasserverdünnbaren Polyole beträgt 100 bis 200 000, vorzugsweise 500 bis 50 000. Zur Verbesserung ihrer Wasserlöslichkeit bzw. Dispergierbarkeit tragen die verwendeten Polyole kovalent gebundene hydrophile Gruppen wie z. B. Polyethylenglykoleinheiten (US 3 920 598; EP-A-0 309 114) oder neutralisierte Carboxyl- oder Sulfonsäuregruppen oder Kombinationen hiervon. Gegebenenfalls können zusätzlich unterstützend nicht-kovalent gebundene, externe Emulgatoren eingesetzt werden.

Als Polyol geeignet sind Polyetherdiole wie Polyethylenglykol, Polypropylenglykol, Polytetramethylenglykol oder Copolymere aus verschiedenen Diolen. Die Molekulargewichte (Mₙ) liegen in der Regel im Bereich von etwa 200 bis etwa 8000.

Weiterhin geeignet sind wasserlösliche oder wasserdispergierbare hydroxyfunktionale Polyacrylate und Polymethacrylate, die neutralisiert sind. Derartige Bindemittelkomponenten sind beispielsweise aus der DE-OS 38 32 826, der EP-A- 0 218 906, der EP-A-0 256 540 oder der EP-A-0 363 723 bekannt. Üblicherweise liegen hierbei die Hydroxylzahlen im Bereich von 30 bis 250, vorzugsweise von 50 bis 200 und die Säurezahlen im Bereich von 20 bis 100, vorzugsweise von 25 bis 40.

Auch wasserlösliche oder wasserdispergierbare carboxyl- und hydroxylgruppenhaltige, neutralisierte gesättigte Polyester, die Hydroxylzahlen von 20 bis 250, vorzugsweise 50 bis 200 und Säurezahlen von 20 bis 100, vorzugsweise 25 bis 60 aufweisen, sind für die Verwendung als Polyol gut geeignet. Derartige Harze werden z. B. in "Lackharze" (Hrg. Stoye, Freitag), S. 45 - 60, Carl Hanser Verlag, München Wien 1996, in der EP-A-0 061 678 oder in der US 5 580 340 beschrieben.

Weiterhin sind wasserlösliche oder wasserdispergierbare urethanmodifizierte carboxyl- und hydroxylgruppenhaltige Polyole auf Basis von Polyester-, Polyetheroder Polycarbonatvorstufen geeignet. Die Hydroxylzahlen liegen hier üblicherweise im Bereich von 30 bis 350, vorzugsweise von 50 bis 200 und die Säurezahlen im Bereich von 10 bis 100, vorzugsweise von 20 bis 60. Beispielhafte Systeme sind unter anderem in der DE-OS 44 45 199, der DE-OS 41 01 697, der EP-A-0 496 205, der EP-A-0 436 941, der EP-A-0 355 682, der EP-A-0 427 028 und der EP-A-0 566 953 beschrieben.

Prinzipiell sind auch wasserlösliche oder wasserverdünnbare Epoxid- oder Alkydharze geeignet, jedoch wegen ihrer Vergilbungsneigung weniger bevorzugt. Derartige Harze sind in L. Dulog, Angew. Makromol. Chem. 123/124 (1984), 437 - 455 sowie in "Lackharze" (Hrg. Stoye, Freitag), Carl Hanser Verlag, München 1996, S. 45 - 81 sowie S. 270 ff. beschrieben.

Die in der Regel sauer modifizierten Polyole werden durch Neutralisation in eine hydrophile Form überführt. Als Neutralisationsmittel können anorganische Basen wie Ammoniak oder organische Basen eingesetzt werden. Geeignete organische Basen sind beispielsweise primäre, sekundäre oder tertiäre Amine, wie Ethylamin, n-Propylamin, Dimethylamin, Di-n-butylamin, Cyclohexylamin, Benzylamin, Morpholin, Piperidin, Triethanolamin, N,N-Dimethylethanolamin, N,N-Diethylethanolamin, Triethylamin, Tri-n-propylamin und Tri-n-butylamin.

Die Polyole, die entweder für sich alleine oder als Mischung verschiedener Typen eingesetzt werden können, liegen bevorzugt als wäßrige Lösung oder als Dispersion mit mittleren Teilchengrößen unter 0,1 µm vor. Es können jedoch auch gröberteilige Dispersionen eingesetzt werden, sofern diese ausreichend lagerstabil sind und beim Auftrag zusammen mit den anderen Komponenten eine ausreichend dünne, glatte Schicht ergeben.

Geeignete Vernetzer für die Polyole sind beispielsweise Aminoplaste oder blockierte Polyisocyanate.

Aminoplaste sind vorzugsweise Kondensationsprodukte aus Formaldehyd und Melamin, Harnstoff, Guanamin oder Benzoguanamin, deren Methylolgruppen teilweise oder vollständig mit Alkoholen verethert sein können. Diese Vernetzerklasse ist beispielsweise in "Lackharze" (Hrg. Stoye, Freitag), Carl Hanser Verlag, München, 1996, S. 104 - 126 beschrieben. Die bevorzugt zu verwendenden zumindest teilweise veretherten Typen weisen eine häufig ausreichende Lagerstabilität, Wasserlöslichkeit und Reaktivität auf.

In der Regel werden die Polyole mit den Aminoplasten im Massenverhältnis der Festharze von 90 : 10 bis 60 : 40 eingesetzt.

Bevorzugt werden als Vernetzer jedoch blockierte Polyisocyanate oder Mischungen von blockierten Polyisocyanaten mit Aminoplasten verwendet.

Unter Polyisocyanaten sollen hierbei alle Verbindungen verstanden werden, die mindestens zwei Isocyanatgruppen im Molekül besitzen. Die Polyisocyanate können aliphatisch, cycloaliphatisch, araliphatisch, aromatisch oder heterocyclisch sein. Derartige Polyisocyanate sind aus W. Siefken, Liebigs Annalen der Chemie, 562, Seiten 75 bis 136 grundsätzlich bekannt.

Bevorzugte Polyisocyanate sind, wegen der hohen Licht- und Vergilbungsbeständigkeit der damit hergestellten Beschichtungen, aliphatische und/oder cycloaliphatische Polyisocyanate mit einem mittleren Molekulargewicht von bis zu etwa 1 000 g/mol, vorteilhaft von etwa 800 g/mol, und einer mittleren Isocyanatfunktionalität von 2 bis 4. Dazu gehören beispielsweise einfache Diisocyanate wie 1,6-Diisocyanatohexan (HDI), Bis(4-isocyanatocyclohexyl)methan (HMDI), 1,5-Diisocyanato-2-methylpentan (MPDI), 1,6-Diisocyanato-2,4,4-trimethylhexan und/oder 1,6-Diisocyanato-2,2,4-trimethylhexan (TMDI) sowie 4-Isocyanatomethyl-3,5,5-trimethylcyclohexylisocyanat (Isophorondiisocyanat; IPDI). Weiterhin gehören dazu durch katalytische Umsetzung dieser einfachen Diisocyanate, vornehmlich von IPDI, HDI und/oder HMDI, hergestellte Dimere mit Uretdion-Struktur.

Eine andere bevorzugte Klasse von Polyisocyanaten sind die durch Allophanatisierung, Trimerisierung, Biuretisierung oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie IPDI, HDI und/oder HMDI, mit mehrwertigen Alkoholen (z. B. Glycerin, Trimethylolpropan, Pentaerythrit) bzw. mit prepolymerisierten Polyolen auf Polyester- oder Polyetherbasis, oder auch mit mehrwertigen Polyaminen, oder Polyisocyanate auf Basis von Isocyanuraten, wie etwa die Triisocyanurate, die durch Trimerisierung der einfachen Diisocyanate, wie IPDI, HDI und HMDI, erhältlich sind. Als Vertreter der (wegen ihrer Vergilbungsneigung weniger bevorzugten) aromatischen Polyisocyanate seien z. B. 2,4- und/oder 2,6-Diisocyanatotoluol sowie 4,4'- und/oder 2,4'-Diisocyanatodiphenylmethan erwähnt.

Die Isocyanatgruppen der zum Einsatz kommenden Polyisocyanate sind durch Umsetzung mit geeigneten Blockierungsmitteln blockiert.

Die Blockierung ist z. B. beschrieben in Z. W. Wicks, Jr., Progress in Organic Coatings 3 (1975), Seiten 73 bis 99 sowie in Z. W. Wicks, Jr., Progress in Organic Coatings 9 (1981), Seiten 3 bis 28. Man verwendet die bekannten Blockierungsmittel, die bei 20 bis 120 °C mit Isocyanatgruppen eine Additionsreaktion eingehen, welche bei höheren Temperaturen reversibel ist, so daß die dann wieder frei werdenden Isocyanatgruppen mit reaktionsfähigen Gruppen eines Polyols reagieren können. Geeignete Blockierungsmittel sind z. B. sekundäre oder tertiäre Alkohole, Phenole, C-H-acide Verbindungen (wie Malonsäurederivate), Lactame (z. B. ε-Caprolactam) und Oxime. Bevorzugte Blockierungsmittel sind Oxime, wie Formaldoxim, Acetaldoxim, Cyclohexanonoxim, Acetophenonoxim, Benzophenonoxim und insbesondere Methylethylketoxim. Weitere brauchbare Blockierungsmittel sind 3,5-Dimethylpyrazol und 1,2,4-Triazol.

Neben diesen blockierten Polyisocyanaten können auch hydrophil eingestellte blockierte Polyisocyanate verwendet werden, die ionische Gruppen bzw. eingebaute Polyalkylenoxideinheiten enthalten. Derartige Verbindungen sind beispielsweise in der EP-A-0 537 578, der DE-OS 24 56 469, der DE-OS 32 34 590, der EP-A-0 839 847, den US-PSS 4 098 933, 4 284 544, 5 508 370 sowie in der dort zitierten Literatur beschrieben.

Die mittlere Funktionalität der erfindungsgemäß zu verwendenden blockierten Polyisocyanate beträgt in der Regel 2,1 bis 6, bevorzugt 2,4 bis 5. Der blockierte NCO-Gehalt beträgt hierbei in der Regel 3 bis 18 Gew.-%, bevorzugt 6 bis 16 Gew.-%. Die Säurezahl des blockierten Polyisocyanatharzes beträgt hierbei 0 bis 60 mg KOH/g Festharz, bevorzugt 0 bis 40 mg KOH/g.

Bei Verwendung von wasserbasierenden blockierten Polyisocyanaten als alleinigem Vernetzer geschieht die Herstellung der erfindungsgemäß eingesetzten wasserbasierenden Komponente II vorzugsweise in der Weise, daß Kombinationen der beschriebenen Polyole mit blockierten Polyisocyanaten im stöchiometrischen Verhältnis von OH zu NCO wie 1 : 0,5 bis 1 : 2 eingesetzt werden.

Im Falle der Verwendung einer Mischung aus Aminoplastharz und blockiertem Polyisocyanat als Vernetzer in Komponente II wird eine geringere Menge des Polyisocyanathärters benötigt, vorzugsweise in einem stöchiometrischen Verhältnis der Hydroxylgruppen des Polyols zu latentem NCO-Gehalt wie 1 : 0,1 bis 1 : 1,5, besonders bevorzugt 1 : 0,2 bis 1 : 1,3; in der Regel wählt man hierbei ein Harzverhältnis von Polyol zu Aminoplast, das zwischen 70 : 30 und 95 : 5 und bevorzugt zwischen 75 : 25 und 90 : 10 liegt.

Von der Synthese des Harzes herrührend, aber auch aus applikationstechnischen Gründen kann das Kaltendvergütungsmittel Cosolvensanteile enthalten. Diese sollten aber weniger als 10 Gew.-% des Kaltendvergütungsmittels und bevorzugt weniger als 5 Gew.-% betragen.

Der anschließende Vemetzungsschritt wird bevorzugt bei einer Temperatur zwischen 150 und 270 °C und besonders bevorzugt bei einer Temperatur zwischen 170 und 230 °C durchgeführt. Die üblichen Verweilzeiten bei dieser Temperatur liegen bei etwa 0,1 Sekunden bis etwa 2 Stunden und üblicherweise bei etwa 2 bis 15 Minuten. Die nötige Wärme wird beispielsweise durch Heißluft, IR-Strahlung, UV-Strahlung oder Mikrowellenstrahlung eingebracht. Es kann aber auch die Eigenwärme der Substrate genutzt werden, die entweder aus einem Vorheizen oder direkt aus dem Herstellungsprozeß resultiert.

Die in einer Ausgestaltungsform dieses Verfahrens mitverwendete Komponente III kann ein Wachs, ein partieller Fettsäureester, eine Fettsäure und/oder ein Tensid sein.

Das als Komponente III verwendete Wachs wird als wäßrige Dispersion eingesetzt. Grundsätzlich kann hierbei jedes in Wasser dispergierbare Wachs verwendet werden.

Natürliche Wachse und synthetische Wachse sind gleichermaßen geeignet. Als natürliche Wachse können sowohl rezente Wachse wie z. B. Bienenwachs, Carnaubawachs oder Candelillawachs als auch fossile Wachse wie z. B. Montanwachs oder dessen Derivate oder Petroleumwachse (sowohl Paraffinwachse als auch Mikrowachse) verwendet werden.

Geeignete synthetische Wachse sind z. B. Fischer-Tropsch-Wachse, Polyolefinwachse wie Polyethylenwachs, Polypropylenwachs, Polyisobutylenwachs, ferner Esterwachs (z. B. Stearinsäureester von Ethylenglykol, Diethylenglykol, Polyethylenglykol, 1.4-Butandiol oder Glycerintristearat), Amidwachse (z. B. N, N'-Distearoylethylendiamin), Polyethylenglykolwachs und Polypropylenglykolwachs.

Unpolare Wachse wie Petroleumwachse, Fischer-Tropsch-Wachse und Polyolefinwachse können zum Zweck besserer Dispergierbarkeit in oxidierter Form eingesetzt werden. Derartige Wachsoxidate sind seit langem Stand der Technik.

Selbstverständlich können auch Mischungen verschiedener Wachse verwendet werden.

Hinsichtlich genauerer Einzelheiten sei auf Ullmann's Encyclopedia of Industrial Chemistry, Vol. A 28, pp. 103 - 163, VCH Verlagsgesellschaft, Weinheim, 1996, verwiesen.

Bevorzugt wird im Rahmen der Erfindung ein Polyethylenwachs (im folgenden als "Polyethylen" bezeichnet) eingesetzt. Das verwendete Polyethylen hat im allgemeinen ein zahlenmittleres Molekulargewicht Mₙ im Bereich von 400 bis 20000. Bevorzugt wird ein Polyethylen mit einem Mₙ im Bereich von 500 bis 15000 und besonders bevorzugt mit einem Mₙ im Bereich von 1000 bis 8000 eingesetzt. Das Polyethylen kann durch thermischen und ggf. radikalischen Abbau von höhermolekularem Polyethylen oder auch durch Polymerisation von Ethylen, entweder radikalisch oder mittels eines Übergangsmetallkatalysators, hergestellt werden.

Das Polyethylen kann in gewissem Ausmaß Verzweigungen besitzen, die auch im Falle von Kurzkettenverzweigung durch die Mitverwendung von olefinischen Comonomeren wie Propen, Buten-(1) oder Hexen-(1) hervorgerufen sein können.

Um eine Dispersion herzustellen, die für die Kaltendvergütung geeignet ist, geht man üblicherweise von anoxidiertem Polyethylen aus, welches ggf. zusätzlich verestert und/oder verseift wurde. Hiervon ist eine Vielzahl von Typen im Handel erhältlich.

Darüber hinaus besteht die Möglichkeit, Copolymerisate einzusetzen, die aus mehr als 50 Mol-% Ethylen und weniger als 50 Mol-% eines polaren Monomeren aufgebaut sind, beispielsweise Ethylen-Vinylacetat-Copolymerwachse oder Copolymerisate aus Ethylen und Acrylsäure.

Eine weitere Möglichkeit zur Herstellung von dispergierfähigem Polyethylen besteht darin, Polyethylen in der Schmelze mit einem ungesättigten polaren Monomeren zu pfropfen, beispielsweise mit Maleinsäureanhydrid. Hierzu ist im allgemeinen die Zugabe eines Radikalstarters sinnvoll.

Aus dem so modifizierten Polyethylen kann, ggf. nach weiterer Modifizierung, nach üblichen Methoden eine nichtionogene, anionogene oder kationogene Dispersion hergestellt werden, wobei normalerweise Tenside als Emulgatoren zugesetzt werden.

Der als Komponente III verwendete partielle Fettsäureester kann jeder Typ sein, der üblicherweise für die Kaltendvergütung eingesetzt wird. Als Beispiele seien Glycerinmonoacetat, Glycerinmonostearat, Glycerindistearat sowie gemischte partielle Ester von Mannit mit Stearinsäure und Palmitinsäure genannt.

Geeignete als Komponente III verwendete Fettsäuren haben die Struktur R-COOH, wobei R ein Rest mit 10 bis 22 C-Atomen ist und geradkettig oder verzweigt, gesättigt oder ungesättigt sein kann. Als Beispiele seien Ölsäure, Stearinsäure, Palmitinsäure und Laurylsäure genannt.

Als Komponente III geeignete Tenside können anionisch, kationisch oder nichtionisch sein. Als anionische Tenside finden beispielsweise Alkalisalze oder Ammoniumsalze von Fettsäuren Verwendung, die mindestens ca. 10 C-Atome enthalten und gesättigt oder ungesättigt sein können. Als Ammoniumsalze sind hierbei Morpholiniumsalze sowie Mono-, Di- oder Triethanolammoniumsalze besonders geeignet. Wegen der lebensmittelrechtlichen Unbedenklichkeit, der guten biologischen Abbaubarkeit sowie der guten anwendungstechnischen Eigenschaften wird insbesondere Kaliumoleat verwendet. Andere geeignete anionische Tenside sind beispielsweise Alkalimetallsalze der Sulfatester von C₈- bis C₁₀-Fettalkoholen oder Alkalimetallsalze der Sulfonsäuren von aliphatischen C₁₂- bis C₂₀-Kohlenwasserstoffen.

Als kationische Tenside können beispielsweise Verbindungen des Typs (RNH₃)⁺CH₃COO⁻ oder (RNH₃)⁺Cl⁻ eingesetzt werden, wobei R ein Kohlenwasserstoffrest mit 8 bis 20 C-Atomen ist. Andere geeignete Ammoniumsalze sind beispielsweise Acetate oder Chloride von [RN(CH₃)₃]⁺ oder [R₂N(CH₃)₂]⁺, wobei R ebenfalls ein C₈- bis C₂₀-Alkyl- oder Aralkylrest ist.

Nichtionische Tenside sind beispielsweise Polyoxyethylenglycerinfettsäureester, Alkylphenolethoxylate mit 5 bis 30, insbesondere mit 6 bis 12 Ethylenoxidgruppen, beispielsweise Octylphenoxy-polyethoxyethanol, Veresterungsprodukte von Fettsäuren, die 7 bis 22 C-Atome enthalten, mit Polyethylenglykol, z. B. von Stearinsäure oder Ölsäure mit PEG-40, Addukte von Ethylenoxid und C₈- bis C₂₀-Alkoholen oder Addukte von Ethylenoxid mit C₈- bis C₂₀-Alkylaminen.

Grundsätzlich kann auch jedes andere, hier nicht aufgeführte Tensid verwendet werden. Einschränkungen bestehen nur insofern, als das Tensid physiologisch möglichst unbedenklich sowie einigermaßen biologisch abbaubar sein sollte.

Selbstverständlich kann die Komponente III auch eine Mischung verschiedener Substanzen sein, etwa von Wachs und Tensid, Wachs, Fettsäure und Tensid, partiellem Fettsäureester und Fettsäure oder jede beliebige andere Kombination.

Als Komponente IV können grundsätzlich alle bekannten organischen Pigmente, anorganischen Pigmente und organischen Farbstoffe verwendet werden. Als anorganische Pigmente können auch Metalliceffekt-Pigmente oder Perlglanzpigmente eingesetzt werden. Geeignete Pigmente bzw. Farbstoffe sind in Ullmann's Encyclopedia of Industrial Chemistry, 5th Edition, Vol. A20, pp. 243 - 413, VCH Verlagsgesellschaft, Weinheim, 1992 sowie in Kirk-Othmer, Encyclopedia of Chemical Technology, 3rd Edition, Vol. 8, pp. 159 - 392, John Wiley & Sons, New York 1979 beschrieben.

Das erfindungsgemäß verwendete Kaltendvergütungsmittel enthält die einzelnen Komponenten bevorzugt in folgenden Konzentrationen:
- Komponente I:: 0,05 bis 20 Gew.-%, besonders bevorzugt 0,1 bis 10 Gew.-% und insbesondere 0,1 bis 5 Gew.-%;
- Komponente II (als Trockensubstanz):: 0,1 bis 5 Gew.-%, besonders bevorzugt 0,2 bis 2 Gew.-%;
- Komponente III (als Trockensubstanz):: 0 bis 5 Gew.-%, besonders bevorzugt 0,05 bis 2 Gew.-%;
- Komponente IV:: 0 bis 10 Gew.-%, besonders bevorzugt 0,1 bis 8 Gew.-%.

Im Rahmen der Erfindung können auch mehrere Schichten ggf. verschiedener Kaltendvergütungsmittel aufgebracht werden; hierbei sollen beispielhaft folgende Ausführungsformen genannt werden:

| | | |
|---|---|---|
| 1. | Schicht 1 | Komponenten I + II + ggf. III + ggf. IV |
| | Schicht 2 | Vergütungsmittel gemäß dem Stand der Technik wie z. B. Wachs, |
| | | partieller Fettsäureester, Fettsäure, Tensid, Polyacrylat, Epoxidharz |
| | | |
| 2. | Schicht 1 | Komponenten I + II + ggf. III + ggf. IV |
| | Schicht 2 | Komponenten I + III |
| | | |
| 3. | Schicht 1 | Komponenten I + II + ggf. III + ggf. IV |
| | Schicht 2 | Komponenten I + II + III |
| | | |
| 4. | Schicht 1 | Komponenten I + II |
| | Schicht 2 | Komponenten I + II + III + IV |
| | | |
| 5. | Schicht 1 | Komponenten I + II |
| | Schicht 2 | Komponenten I + II + IV |
| | Schicht 3 | Komponenten I + III |
| | | |
| 6. | Schicht 1 | Komponenten I + II |
| | Schicht 2 | Komponenten I + II + IV |
| | Schicht 3 | Vergütungsmittel gemäß dem Stand der Technik |
| | | |
| 7. | Schicht 1 | Komponenten I + II |
| | Schicht 2 | Komponenten II + III |
| | | |
| 8. | Schicht 1 | Komponenten I + II |
| | Schicht 2 | Komponenten II + III + IV |

Die wäßrige Zusammensetzung, die die Komponenten I und II sowie ggf. III und IV enthält, kann wahlweise gleich in gebrauchsfertiger Konzentration hergestellt werden oder auch zunächst als Konzentrat, das dann vor der Verwendung mit Wasser verdünnt wird.

Die Schicht des Kaltendvergütungsmittels wird auf die Oberfläche der Hohlglasbehälter in herkömmlicher Weise aufgebracht, wie Sprühen, Tauchen oder Aufrollen. Die Auftragung des Kaltendvergütungsmittels erfolgt im Temperaturbereich der Glasoberflächen von etwa 30 bis 150 °C, bevorzugt von etwa 70 bis 110 °C und besonders bevorzugt von 80 bis 100 °C.

Beim Auftrag der zweiten und ggf. dritten Schicht kann nach dem Auftrag jeder Schicht, die eine Komponente II enthält, ein separater Vernetzungsschritt durchgeführt werden. Eine einfachere Vorgehensweise besteht darin, daß man nach dem Trocknen der zuletzt aufgetragenen Schicht, was in der Regel etwa eine bis mehrere Sekunden benötigt, die nächste Schicht aufträgt. Der Vernetzungsschritt wird dann abschließend nach dem Auftrag der letzten Schicht durchgeführt.

Hydroxylzahlen und Säurezahlen sind durchweg in mg KOH/g angegeben. Sie werden gemäß DIN 53240/ASTM E222 bzw. DIN 53402 bestimmt.

Die Erfindung soll im folgenden anhand von Beispielen erläutert werden.

### Beispiel 1:

Dieses Beispiel erläutert die Behandlung von heißendvergüteten (TiCl₄) 0,5 ltr NRW-Bierflaschen mit einer Mischung der Komponenten I, II und III.
a) Komponente I: 0,5 Gew.-Teile 3-Aminopropyltriethoxysilan
b) Komponente II: 2 Gew.-Teile VESTICOAT® EP-DS 2779, einer cosolvensfreien Dispersion auf Basis eines carboxyl- und hydroxylgruppenhaltigen Acrylatharzes und eines nicht-hydrophilen, MEK-Oxim-blockierten IPDI-Trimeren; Feststoffgehalt ca. 30 Gew.-% (Creanova Spezialchemie GmbH, D-45764 Marl)
c) Komponente III: 2,0 Gew.-Teile einer Polyethylendispersion der Handelsbezeichnung TECOL OG 25 der Fa. Trüb Chemie, Ramsen, Schweiz (Feststoffgehalt 25 Gew.-%; anionisches Emulgatorsystem)

Zur Herstellung des Kaltendvergütungsmittels wurden 95,5 Gew.-Teile Wasser vorgelegt und dann nacheinander die Komponenten I, II und III eingemischt.

Die Applikation des Beschichtungsmittels erfolgte bei ca. 80 °C mit Hilfe eines modifizierten Sprühverfahrens. Nach der Beschichtung wurden alle behandelten Flaschen 15 Minuten lang bei 200 °C in einem Trockenschrank getempert und anschließend auf Raumtemperatur abgekühlt. Für alle Versuchsreihen wurden jeweils die Innendruckfestigkeiten einer Formennummer am Kühlofenausgang (nach Tempern), nach 5, 10, 30 und nach 60 Minuten Liniensimulator (naß) ermittelt und mit den Innendruckfestigkeiten der gemäß dem Stand der Technik vergüteten Flaschen verglichen. Die Tabelle 1 zeigt die ermittelten Innendruckfestigkeiten, die Tabelle 2 die ermittelten Schlag- und Kratzfestigkeiten.

Zum Vergleich wurde eine Standardkaltendvergütung gemäß dem Stand der Technik mit einer Mischung aus 2,0 Gew.-Teilen TECOL OG 25 und 98,0 Gew.-Teilen Wasser vorgenommen.

**Tabelle 1**

| | | |
|---|---|---|
| **Kühlofen** | **HV/KV** | **HV/EKB** |
| Mittelwert [bar] | 45,20 | 51,88 |
| Standardabweichung [bar] | 8,28 | 5,82 |
| **5 min Liniensimulator** | **HV/KV** | **HV/EKB** |
| Mittelwert [bar] | 22,03 | 41,20 |
| Standardabweichung [bar] | 2,50 | 8,61 |
| **10 min Liniensimulator** | **HV/KV** | **HV/EKB** |
| Mittelwert [bar] | 20,71 | 40,75 |
| Standardabweichung [bar] | 1,73 | 9,69 |
| **30 min Liniensimulator** | **HV/KV** | **HV/EKB** |
| Mittelwert [bar] | 20,96 | 35,72 |
| Standardabweichung [bar] | 1,46 | 3,90 |
| **60 min Liniensimulator** | **HV/KV** | **HV/EKB** |
| Mittelwert [bar] | 20,59 | 32,97 |
| Standardabweichung [bar] | 1,23 | 4,49 |
| HV: Heißendvergütung KV: Kaltendvergütung gemäß dem Stand der Technik EKB: Erfindungsgemäße Kaltendbeschichtung | | |

**Tabelle 2**

| | | |
|---|---|---|
| **Schlagfestigkeit (Impact)** | **HV/KV** | **HV/EKB** |
| Mittelwert [ips] | 110,75 | 115,75 |
| Standardabweichung [ips] | 11,15 | 10,55 |
| **Kratzfestigkeit naß** | **HV/KV** | **HV/EKB** |
| Mittelwert [lbs] | 67,00 | > 70,00 *) |
| Standardabweichung [lbs] | 2,50 | 0,00 *) |
| HV: Heißendvergütung KV: Kaltendvergütung gemäß dem Stand der Technik EKB: Erfindungsgemäße Kaltendbeschichtung | | |

| | | |
|---|---|---|
| *) Gerät bietet nur maximale Belastung von 70 lbs | | |

### Beispiel 2:

Dieses Beispiel erläutert die Behandlung einer 0,75 ltr Weinflasche sowohl mit als auch ohne Heißendvergütung (TiCl₄) mit einer Mischung der Komponenten I und II.
a) Komponente I:
   1,5 Gew.-Teile eines Silanhydrolysats, das auf folgende Weise hergestellt wurde: 1580 g Wasser (87,8 mol) werden in einem beheizbaren Rührreaktor (Innenthermometer, Dosiervorrichtung über Tauchrohr, Destilliervorrichtung, Anschluß an Vakuumpumpe) vorgelegt und langsam 540 g 3-Aminopropyltriethoxysilan (2,4 mol) zudosiert, so daß die Temperatur 50 °C nicht überschreitet. Diese Reaktion ist schwach exotherm. Danach thermostatisiert man auf 50 °C und rührt noch weitere 6 Stunden. Nach dieser Zeit ist das Silan vollständig zum entsprechenden Silanol hydrolysiert und in der gebildeten EtOH/H₂O-Mischung gelöst. Danach wird der Hydrolysealkohol bei einem Druck von 100 - 70 mbar und einer Sumpftemperatur von max. 50 °C abdestilliert.
      Wenn die Kopftemperatur ca. 48 °C beträgt und das Kopfprodukt nur noch H₂O enthält, wird die Destillation beendet und das Produkt durch Zugabe von H₂O auf ein Gewicht von 1980 g eingestellt.
b) Komponente II:
   2,0 Gew.-Teile einer kommerziell erhältlichen wäßrigen, cosolvenshaltigen Dispersion auf Basis eines carboxyl- und hydroxylhaltigen Harzes und eines blockierten Polyhydrodiphenylmethan-4.4'-diisocyanats mit einem Feststoffgehalt von ca. 32 Gew.-%.

Zur Herstellung des Kaltendvergütungsmittels wurden 96,5 Gew.-Teile Wasser vorgelegt und dann nacheinander die Komponenten I und II eingemischt.

Die Applikation des Beschichtungsmittels erfolgte bei 102 °C mit Hilfe eines modifizierten Sprühverfahrens; anschließend wurde in einer im Kühlofen integrierten Härtezone ausgehärtet (200 °C/8,5 Minuten einschließlich Aufheizen). Für alle Versuchsreihen wurden jeweils die Innendruckfestigkeiten einer Formennummer am Kühlofenaustrag und nach 3 und 10 Minuten Liniensimulator (naß) ermittelt und mit den Innendruckfestigkeiten der gemäß dem Stand der Technik vergüteten Flasche verglichen. Die Tabelle 3 zeigt die ermittelten Innendruckfestigkeiten mit dazugehörigen Standardabweichungen.

Zum Vergleich wurde eine Standardkaltendvergütung gemäß dem Stand der Technik mit einer Mischung aus 1,5 Gew.-Teilen TECOL OG 25 und 98,5 Gew.-Teilen Wasser vorgenommen.

**Tabelle 3**

| | | | |
|---|---|---|---|
| **Kühlofen** | **HV/KV** | **HV/EKB** | **EKB** |
| Mittelwert [bar] | 26,11 | 27,02 | 26,85 |
| Standardabweichung [bar] | 4,08 | 3,77 | 4,32 |
| **3 min Liniensimulator** | **HV/KV** | **HV/EKB** | **EKB** |
| Mittelwert [bar] | 13,47 | 26,61 | 23,74 |
| Standardabweichung [bar] | 1,18 | 4,10 | 5,96 |
| **10 min Liniensimulator** | **HV/KV** | **HV/EKB** | **EKB** |
| Mittelwert [bar] | 12,72 | 21,13 | 17,88 |
| Standardabweichung [bar] | 0,85 | 4,36 | 4,58 |
| HV: Heißendvergütung KV: Kaltendvergütung gemäß dem Stand der Technik EKB: Erfindungsgemäße Kaltendbeschichtung | | | |

### Beispiel 3:

Dieses Beispiel erläutert die großtechnische Beschichtung von 1,0 ltr Softdrinkflaschen in einer Produktionsanlage und vergleicht die Erfindung mit dem Stand der Technik, wie er durch die WO-A-98/45216 vorgegeben ist.
a) Erfindungsgemäßes Beschichtungsmittel:
   0,5 Gew.-Teile 3-Aminopropyltriethoxysilan, 1,5 Gew.-Teile einer Polyethylendispersion (TECOL OG 25 der Fa. Trüb Chemie, Ramsen, Schweiz) und 2,0 Gew.-Teile der gleichen Dispersion aus Harz und blockiertem Diisocyanat wie im Beispiel 2 werden nacheinander zu 96 Gew.-Teilen Wasser gegeben.
b) Beschichtungsmittel gemäß dem Stand der Technik:
   1,5 Gew.-Teile der gleichen Polyethylendispersion werden mit 98 Gew.-Teilen Wasser versetzt. Anschließend werden 0,5 Gew.-Teile 3-Aminopropyltriethoxysilan eingemischt, worauf man 6 Stunden bei Raumtemperatur stehen läßt. Die Mischung ist nun einsatzbereit.

Die Applikation des Beschichtungsmittels erfolgte in beiden Fällen bei 103 °C über eine Sprühbrücke; anschließend wurden die erfindungsgemäß beschichteten Flaschen in einem Härtetunnel ausgehärtet (200 °C/6,25 Minuten einschließlich Aufheizen). Für die anschließenden Untersuchungen wurden danach 120 Flaschen gleicher Formnummer entnommen. Die Versuchsflaschen wurden dann auf ihre Innendruckfestigkeit (Nullprobe, 3 Minuten sowie 10 Minuten Liniensimulator) mittels Ramp-Pressure-Tester sowie auf ihre Pendelschlagfestigkeit überprüft. Die Ergebnisse sind in der Tabelle 4 wiedergegeben.

Die gleichen Untersuchungen wurden zum Vergleich an 120 Flaschen gleicher Formnummer wie oben durchgeführt, die mit dem gemäß b) hergestellten Beschichtungsmittel entsprechend der WO-A-98/45216 beschichtet wurden. Die Ergebnisse sind ebenfalls in der Tabelle 4 wiedergegeben.

**Tabelle 4**

| | | |
|---|---|---|
| **Kühlofen** | **HV/KB** | **HV/EKB** |
| Mittelwert [bar] | 32,64 | 33,62 |
| Standardabweichung [bar] | 8,12 | 7,17 |
| **3 min Liniensimulator** | **HV/KB** | **HV/EKB** |
| Mittelwert [bar] | 21,13 | 30,43 |
| Standardabweichung [bar] | 3,77 | 5,53 |
| **10 min Liniensimulator** | **HV/KB** | **HV/EKB** |
| Mittelwert [bar] | 16,26 | 27,51 |
| Standardabweichung [bar] | 1,89 | 5,93 |
| **Pendelschlagfestigkeit***) | **HV/KB** | **HV/EKB** |
| Mittelwert [ips] | 109,50 | 118,0 |
| Standardabweichung [ips] | 16,12 | 8,72 |

| | | |
|---|---|---|
| *) nach Kühlofenaustrag HV: Heißendvergütung KB: Kaltendbeschichtung gemäß WO-A-98/45216 EKB: Erfindungsgemäße Kaltendbeschichtung | | |

## Patentansprüche

1. Verfahren zur Herstellung oberflächenversiegelter Hohlglasbehälter, wobei im Herstellungsprozeß im Bereich des Austritts des Kühlofens, der einer Maschine zur Herstellung von Hohlglasbehältern nachgeordnet ist, eine Beschichtung der Hohlglasbehälter mittels eines wasserbasierenden Kaltendvergütungsmittels erfolgt, das mindestens folgende Komponenten enthält:
I. Ein Trialkoxysilan, ein Dialkoxysilan und/oder ein Tetraalkoxysilan beziehungsweise deren Hydrolyse- und/oder Kondensationsprodukte sowie
II. die wasserlösliche oder wasserdispergierbare Mischung aus einem Polyol und einem Vernetzer für das Polyol,
wobei die aufgetragene Schicht des Kaltendvergütungsmittels anschließend einem Vernetzungsschritt im Temperaturbereich zwischen 100 und 350 °C unterworfen wird.

2. Verfahren gemäß Anspruch 1,
**dadurch gekennzeichnet,**
**daß** das wasserbasierende Kaltendvergütungsmittel zusätzlich zu den Komponenten I und II noch folgende Komponente enthält:
III. Eine siliciumfreie Komponente, ausgewählt aus
a) einem Wachs und/oder
b) einem partiellen Fettsäureester und/oder
c) einer Fettsäure und/oder
d) einem Tensid.

3. Verfahren gemäß einem der vorhergehenden Ansprüche,
**dadurch gekennzeichnet,**
**daß** das wasserbasierende Kaltendvergütungsmittel zusätzlich folgende weitere Komponente enthält:
IV. Ein Färbungsmittel, ausgewählt aus organischen Pigmenten, anorganischen Pigmenten und/oder organischen Farbstoffen.

4. Verfahren gemäß einem der vorhergehenden Ansprüche,
**dadurch gekennzeichnet,**
**daß** als Komponente I eine wasserbasierende organopolysiloxanhaltige Zusammensetzung eingesetzt wird, die hergestellt wird aus
a) Q Molen eine funktionelle Gruppe tragender Alkoxysilane der allgemeinen Formel
A-Si(R¹)_{y}(OR*)_{3-y} I
und
b) M Molen Alkoxysilane, ausgewählt aus
α) Trialkoxysilanen der allgemeinen Formel
R²-Si(OR**)₃ II
und/oder
β) Dialkoxysilanen der allgemeinen Formel
R³R⁴Si(OR***)₂ III
und/oder
γ) Tetraalkoxysilanen der allgemeinen Formel
Si(OR****)₄, IV
wobei A einen Substituenten bedeutet, der mindestens eine direkt oder über einen aliphatischen oder aromatischen Kohlenwasserstoffrest mit Silicium verbundene Amino-, Alkylamino-, Dialkylamino-, Amido-, Epoxy-, Acryloxy-, Methacryloxy-, Cyano-, Isocyanato-, Ureido-, Thiocyanato-, Mercapto-, Sulfanoder Halogengruppe besitzt,
R¹ = Methyl, Ethyl oder A (wie vorstehend definiert),
y = 0 oder 1,
R*, R**, R*** und R**** sind unabhängig voneinander eine Alkylgruppe mit 1 bis 8 C-Atomen oder eine entsprechende Alkylgruppe, die mit einem Alkyl[(poly)ethylenglykol]-Rest substituiert ist,
R², R³ und R⁴ sind unabhängig voneinander eine Alkyl-, Alkenyl-, Alkinyl-, Cycloalkyl-, Cycloalkenyl- oder aromatische Gruppe mit jeweils maximal 18 C-Atomen oder eine derartige Gruppe, die teil- oder perfluoriert und/oder mit Alkyloxy- und/oder mit Aryloxygruppen substituiert ist,
im molaren Verhältnis 0 ≤ M/Q ≤ 20.

5. Verfahren gemäß Anspruch 4,
**dadurch gekennzeichnet,**
**daß** im Gemisch der Silane I bis IV durchschnittlich mindestens 2,4 Alkoxygruppen OR*, OR**, OR*** bzw. OR**** pro Siliciumatom enthalten sind.

6. Verfahren gemäß einem der Ansprüche 4 und 5,
**dadurch gekennzeichnet,**
**daß** die wasserbasierende organopolysiloxanhaltige Zusammensetzung hergestellt wird durch Mischen der Silanzusammensetzung gemäß den allgemeinen Formeln I bis IV mit Wasser und Stehenlassen bei Raumtemperatur über mindestens 3 Stunden.

7. Verfahren gemäß einem der Ansprüche 4 bis 6,
**dadurch gekennzeichnet,**
**daß** die wasserbasierende organopolysiloxanhaltige Zusammensetzung hergestellt wird durch Versetzen der Silanzusammensetzung gemäß den allgemeinen Formeln I bis IV mit 0,5 bis 30 Molen Wasser pro Mol der eingesetzten Alkoxysilane und Entfernen des bei der Umsetzung entstandenen Alkohols durch Destillation.

8. Verfahren gemäß einem der vorhergehenden Ansprüche,
**dadurch gekennzeichnet,**
**daß** der Vernetzer der Komponente II ein Aminoplast oder ein blockiertes Polyisocyanat ist.

9. Verfahren gemäß einem der vorhergehenden Ansprüche,
**dadurch gekennzeichnet,**
**daß** die Oberflächen der frisch hergestellten Hohlglasbehälter mit einer Heißendvergütung versehen sind.

10. Verfahren gemäß einem der vorhergehenden Ansprüche,
**dadurch gekennzeichnet,**
**daß** das Kaltendvergütungsmittel die einzelnen Komponenten in folgenden Konzentrationen enthält:
| | | |
|---|---|---|
| I. | Komponente I | 0,05 bis 20 Gew.-%; |
| II. | Komponente II | 0,1 bis 5 Gew.-%; |
| III. | Komponente III | 0 bis 5 Gew.-%; |
| IV. | Komponente IV | 0 bis 10 Gew.-%. |

11. Verfahren gemäß einem der vorhergehenden Ansprüche,
**dadurch gekennzeichnet,**
**daß** das Kaltendvergütungsmittel bis zu 10 Gew.-% organische Cosolventien enthält.

12. Verfahren gemäß einem der vorhergehenden Ansprüche,
**dadurch gekennzeichnet,**
**daß** die Temperatur der Glasoberfläche beim Auftragen des Kaltendvergütungsmittels im Bereich von 30 bis 150 °C liegt.

13. Verfahren gemäß Anspruch 12,
**dadurch gekennzeichnet,**
**daß** die Temperatur der Glasoberfläche im Bereich von 70 bis 110 °C liegt.

14. Verfahren gemäß einem der vorhergehenden Ansprüche,
**dadurch gekennzeichnet,**
**daß** der Vemetzungsschritt bei einer Temperatur zwischen 150 und 270 °C durchgeführt wird.

15. Verfahren gemäß Anspruch 14,
**dadurch gekennzeichnet,**
**daß** die Temperatur zwischen 170 und 230 °C liegt.

## Claims

1. A process for producing surface-sealed hollow glass containers in which, in the production process in the region of the exit from the annealing lehr which is located downstream of a machine for producing hollow glass containers, the hollow glass containers are coated by means of a water-based cold end coating composition comprising at least the following components:
I. a trialkoxysilane, a dialkoxysilane and/or a tetraalkoxysilane or their hydrolysis and/or condensation products and also
II. a water-soluble or water-dispersible mixture of a polyol and a crosslinker for the polyol,
wherein the applied layer of the cold end coating composition is subsequently subjected to a crosslinking step in the temperature range from 100 to 350°C.

2. The process as claimed in claim 1, wherein the water-based cold end coating composition further comprises, in addition to the components I and II, the following component:
III. a silicon-free component selected from the group consisting of
a) a wax and/or
b) a partial fatty acid ester and/or
c) a fatty acid and/or
d) a surfactant.

3. The process as claimed in either of the preceding claims, wherein the water-based cold end coating composition further comprises the following additional component:
IV. a colorant selected from the group consisting of organic pigments, inorganic pigments and/or organic dyes.

4. The process as claimed in any of the preceding claims, wherein component I is a water-based organopolysiloxane-containing composition prepared from
a) Q mol of an alkoxysilane bearing functional groups and having the formula
A-Si(R¹)_{y}(OR*)_{3-y} I
and
b) M mol of alkoxysilanes selected
from the group consisting of
α) trialkoxysilanes of the formula
R²-Si(OR**)₃ II
and/or
β) dialkoxysilanes of the formula
R³R⁴Si(OR***)₂ III
and/or
γ) tetraalkoxysilanes of the formula
Si(OR****)₄ IV
where A is a substituent which bears at least one amino, alkylamino, dialkylamino, amido, epoxy, acryloxy, methacryloxy, cyano, isocyanato, ureido, thiocyanato, mercapto, sulfane or halogen group bound to silicon either directly or via an aliphatic or aromatic hydrocarbon radical,
R¹ = methyl, ethyl or A (as defined above),
y = 0 or 1,
R*, R**, R*** and R**** are each, independently of one another, an alkyl group having from 1 to 8 carbon atoms or a corresponding alkyl group substituted by an alkyl[(poly)ethylene glycol] radical,
R², R³ and R⁴ are each, independently of one another, an alkyl, alkenyl, alkynyl, cycloalkyl, cycloalkenyl or aromatic group having in each case a maximum of 18 carbon atoms or such a group which is partially fluorinated or perfluorinated and/or substituted by alkyloxy and/or aryloxy groups,
in a molar ratio 0 ≤ M/Q ≤ 20.

5. The process as claimed in claim 4, wherein an average of at least 2.4 alkoxy groups OR*, OR**, OR*** and OR**** are present per silicon atom in the mixture of the silanes I to IV.

6. The process as claimed in claim 4 or 5, wherein the water-based organopolysiloxane-containing composition is prepared by mixing the silane composition comprising compounds of the formulae I to IV with water and allowing the mixture to stand at room temperature for at least 3 hours.

7. The process as claimed in any of claims 4 to 6, wherein the water-based organopolysiloxane-containing composition is prepared by admixing the silane composition comprising compounds of the formulae I to IV with from 0.5 to 30 mol of water per mol of alkoxysilanes used and removing the alcohol formed in the reaction by distillation.

8. The process as claimed in any of the preceding claims, wherein the crosslinker of component II is an amino resin or a blocked polyisocyanate.

9. The process as claimed in any of the preceding claims, wherein the surfaces of the freshly produced hollow glass containers are provided with a hot end coating.

10. The process as claimed in any of the preceding claims, wherein the cold end coating composition comprises the individual components in the following concentrations:
| | | |
|---|---|---|
| I. | Component I | from 0.05 to 20% by weight; |
| II. | Component II | from 0.1 to 5% by weight; |
| III. | Component III | from 0 to 5% by weight; |
| IV. | Component IV | from 0 to 10% by weight. |

11. The process as claimed in any of the preceding claims, wherein the cold end coating composition contains up to 10% by weight of organic cosolvents.

12. The process as claimed in any of the preceding claims, wherein the temperature of the glass surface when the cold end coating composition is applied is in the range from 30 to 150°C.

13. The process as claimed in claim 12, wherein the temperature of the glass surface is in the range from 70 to 110°C.

14. The process as claimed in any of the preceding claims, wherein the crosslinking step is carried out at a temperature of from 150 to 270°C.

15. The process as claimed in claim 14, wherein the temperature is from 170 to 230°C.

## Revendications

1. Procédé de traitement de récipients en verre creux renforcés en surface, dans lequel dans le processus de production dans la zone de sortie de l'arche de refroidissement en aval d'une machine de production de récipients en verre creux, un revêtement du récipient en verre creux s'effectue à l'aide d'un agent de traitement à froid à base d'eau contenant au moins les composants suivants :
I. un trialkoxysilane, un dialkoxysilane et/ou un tetraalkoxysilane, respectivement leurs produits d'hydrolyse et/ou de leurs produits de condensation, ainsi que
II. un mélange soluble dans l'eau ou dispersible dans l'eau d'un polyol et d'un agent de réticulation du polyol,
la couche d'agent de traitement à froid ainsi appliquée étant ensuite soumise à une réticulation sur une plage de température entre 100 et 350 °C.

2. Procédé selon la revendication 1,
**caractérisé en ce que**
l'agent de traitement à froid à base d'eau contient en plus des composants 1 et II les composants suivants :
III. Un composant dépourvu de silicium choisi parmi
a) une cire et/ou
b) un ester d'acide gras partiel et/ou
c) un acide gras et/ou
d) un agent tensioactif.

3. Procédé selon l'une des revendications précédentes,
**caractérisé en ce que**
l'agent de traitement à froid à base d'eau contient en plus le composant additionnel suivant :
IV. Un agent de coloration, choisi parmi des pigments organiques, des pigments inorganiques et/ou des colorants organiques.

4. Procédé selon l'une des revendications précédentes,
**caractérisé en ce que**
une composition à base d'eau contenant des organopolysiloxanes est utilisée comme composant I, laquelle est préparée à partir de
a) Q moles d'un alkoxysilane portant un groupe fonctionnel et de formule générale
A-Si(R¹)_{y}(OR*)_{3-y} I
et
b) M moles d'alkoxysilanes sélectionnés parmi
∀) des trialkoxysilanes de formule générale
R²-Si(OR**)₃ II
et/ou
∃) des dialkoxysilanes de formule générale
R³R⁴Si(OR***)₂ III
et/ou
() des tetraalkoxysilanes de formule générale
Si(OR****)₄, IV
dans lesquelles A signifie un substituant qui possède au moins un groupe amino, alkylamino, dialkylamino, amido, epoxy, acryloxy, methacryloxy, cyano, isocyanato, uréido, thiocyanato, mercapto, sulfane ou halogène lié directement ou par l'intermédiaire d'un reste hydrocarboné aliphatique ou aromatique au silicium,
R¹ = méthyl, éthyl ou A (défini comme précédemment),
y = 0 ou 1,
R*, R**, R*** et R**** sont indépendamment l'un de l'autre un groupe alkyle avec 1 à 8 atomes de carbone ou un groupe alkyle correspondant qui est substitué par un reste alkyl[(poly)éthylèneglycol],
R², R³ et R⁴ sont indépendamment l'un de l'autre un groupe alkyle, alkényle, alkinyle, cycloalkyle, cycloalkényle ou aromatique ayant respectivement au maximum 18 atomes de carbone ou un groupe de cette sorte qui est partiellement ou perfluoré et/ou substitué par des groupes alkyloxy et/ou aryloxy,
dans un rapport molaire 0 ≤ M/Q ≤ 20.

5. Procédé selon la revendication 4,
**caractérisé en ce que**
le mélange des silanes I à IV contient en moyenne au moins 2,4 groupes alkoxy OR*, OR**, OR*** ou OR**** par atome de silicium.

6. Procédé selon l'une des revendications 4 et 5,
**caractérisé en ce que**
la composition à base d'eau contenant des organopolysiloxanes est produite par mélange de la composition de silane conformément aux formules générales I à IV avec de l'eau, et par un temps de repos à température ambiante pendant au moins 3 heures.

7. Procédé selon l'une des revendications 4 à 6,
**caractérisé en ce que**
la composition à base d'eau contenant des organopolysiloxanes est produite par addition à la composition de silane conformément aux formules générales I à IV de 0,5 à 30 moles d'eau par mole des alkoxysilanes utilisés, et élimination par distillation de l'alcool formé au cours de la réaction.

8. Procédé selon l'une des revendications précédentes,
**caractérisé en ce que**
l'agent de réticulation du composant II est un aminoplaste ou un polyisocyanate bloqué.

9. Procédé selon l'une des revendications précédentes,
**caractérisé en ce que**
les surfaces du récipient en verre creux fraîchement préparé sont pourvues d'un traitement à chaud.

10. Procédé selon l'une des revendications précédentes,
**caractérisé en ce que**
l'agent de traitement à froid renferme les composants individuels dans les proportions suivantes :
| | | |
|---|---|---|
| I. | Composant I | 0,05 à 20 % en poids ; |
| II. | Composant II | 0,1 à 5 % en poids ; |
| III. | Composant III | 0 à 5 % en poids ; |
| IV. | Composant IV | 0 à 10 % en poids. |

11. Procédé selon l'une des revendications précédentes,
**caractérisé en ce que**
l'agent de traitement à froid renferme jusqu'à 10 % en poids de co-solvants organiques.

12. Procédé selon l'une des revendications précédentes,
**caractérisé en ce que**
la température de la surface du verre à l'application d'agent de traitement à froid se situe entre 30 et 150 °C.

13. Procédé selon la revendication 12,
**caractérisé en ce que**
la température de la surface du verre se situe entre 70 et 110 °C.

14. Procédé selon l'une des revendications précédentes,
**caractérisé en ce que**
la réticulation est effectuée à une température située entre 150 et 270 °C.

15. Procédé selon la revendication 14,
**caractérisé en ce que**
la température se situe entre 170 et 230 °C.
